(19) 

Europäisches
Patentamt
European
Patent Office
Office européen
des brevets

(11) **EP 4 033 379 A1**

(12) **EUROPEAN PATENT APPLICATION**

(43) Date of publication:
**27.07.2022   Bulletin 2022/30**

(21) Application number: **22152983.7**

(22) Date of filing: **24.01.2022**

(51) International Patent Classification (IPC):
***G06F 17/15*** (2006.01)

(52) Cooperative Patent Classification (CPC):
**G06F 17/153**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.01.2021   GB 202100937**

(71) Applicant: **Imagination Technologies Limited
Kings Langley, Hertfordshire WD4 8LZ (GB)**

(72) Inventors:
- **AHMADI, Aria
  London (GB)**
- **DIKICI, Cagatay
  London (GB)**
- **CHARNAY, Clement
  Watford (GB)**

(74) Representative: **Elkington and Fife LLP
Prospect House
8 Pembroke Road
Sevenoaks, Kent TN13 1XR (GB)**

(54) **IMPLEMENTING DILATED CONVOLUTION IN HARDWARE**

(57)    A method and data processing system are provided for implementing dilated convolution operations in hardware. Embodiments provide various ways to implement a dilated convolution based on a number of constituent convolutions, by either splitting the kernel to construct a set of constituent convolutions with smaller kernels, or dividing the input data into multiple parts and applying a convolution to each part separately. The constituent convolutions are evaluated in hardware and their results are combined to produce the result of the dilated convolution.

FIGURE 9

**Description**

BACKGROUND

Dilated convolution is frequently used in artificial neural networks - for example, for object detection, image segmentation, and human pose estimation. Networks that use dilated convolution include Deeplabv3, single-shot detector (SSD) GoogLeNet, and ENet, to name a few.

The idea behind dilated convolution stems from wavelet decompositions. It is also known as "a trous convolution" or "algorithme a trous" (meaning, "hole algorithm"). In dilated convolution, the coefficients of a convolution kernel are spread over an enlarged receptive field, without increasing the number of weights and without the need for pooling of the input data. This is done by applying the coefficients to the input data with gaps (holes).

A dilated convolution can be expressed by the following summation:

$$Y(i,j,l) = \sum_{m=0}^{k_h-1} \sum_{n=0}^{k_w-1} \sum_{c=0}^{C-1} X(si + Dm + p_{\overline{h}}, sj + Dn + p_{\overline{w}}, c) W(m,n,c,l)$$

Here, $k_h$ and $k_w$ are the kernel height and width, respectively. C is the number of input channels. X is the input data and Y is the output data. The variable I indexes the output channels. D is the dilation rate; s is the stride; and $p_{\overline{h}}$ and $p_{\overline{w}}$ represent the padding in the height and width dimensions, respectively. For simplicity, the equation above uses the same dilation rate D and stride s in both the height and width dimensions; however, more generally, these parameters may be chosen independently for each dimension. It can be seen from the equation that a dilation rate of D means that successive weights of the kernel are applied to input data elements that are an interval of D elements apart. The larger the dilation rate, the larger the receptive field of the dilated convolution operation. A value of D=1 corresponds to "normal" convolution - that is, convolution without any dilation.

Existing neural network accelerator (NNA) hardware is generally specialised at evaluating convolutional layers. It would be desirable to be able to implement dilated convolutions efficiently on such hardware.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method and data processing system are provided for implementing dilated convolution operations in hardware. Embodiments provide various ways to implement a dilated convolution based on a number of constituent convolutions, by either splitting the kernel to construct a set of constituent convolutions with smaller kernels, or dividing the input data into multiple parts and applying a convolution to each part separately. The constituent convolutions are evaluated in hardware and their results are combined to produce the result of the dilated convolution.

According to the present disclosure, there are provided methods of implementing in hardware a dilated convolution, according to claim 1 and claim 2.

In some examples, the mapping may comprise splitting the kernel into a plurality of constituent kernels, each constituent kernel comprising a single coefficient or a single coefficient per input channel, each constituent kernel to be applied in a respective one of the constituent convolutions. Combining the partial results may comprise summing the partial results to produce the result of the dilated convolution.

Each kernel may consist of a single coefficient in the case of depthwise convolution, in particular. Each kernel may consist of a single coefficient per input channel in the case of an "ordinary" (rather than depthwise) convolution, in particular. "Depth-wise" convolution means a convolution in which each filter pertains to a separate input channel. That is, the input channels are treated separately and there is no summing across input channels.

According to one aspect of the presently claimed invention, the mapping comprises splitting the kernel into a plurality of constituent kernels, each constituent kernel comprising a row or column of the kernel, interspersed with zeros, each constituent kernel to be applied in a respective one of the constituent convolutions. Combining the partial results comprises summing the partial results to produce the result of the dilated convolution.

Each constituent kernel may contain the same number of channels as the original kernel. The row or column represents a slice of the original kernel, the slice having height=1 (for a row) or width=1 (for a column).

According to another aspect of the presently claimed invention, the mapping comprises dividing the input data into a plurality of parts, each part to be subjected to a respective one of the constituent convolutions. Combining the partial results comprises interleaving the partial results to produce the result of the dilated convolution.

Each part may be generated by subsampling the input data by a factor corresponding to the dilation rate. Each part may be generated by subsampling with a different starting offset. The interleaving may be performed according to the dilation rate.

The mapping comprises constructing an augmented kernel for use in each of the constituent convolutions, wherein the augmented kernel is constructed by inserting zeros between the coefficients of the kernel along a first dimension. The input data is divided into a plurality of parts along a second dimension, different from the first dimension.

Alternatively, the input data may be divided into a plurality of parts along a first dimension and a second dimension, the second dimension being different from the first dimension.

The first dimension may be a width dimension and the second dimension may be a height dimension (or vice versa).

Optionally, the mapping comprises: selecting among a number of candidate mappings, each candidate mapping being associated with a respective plurality of constituent convolutions; and implementing the dilated convolution based on the selected candidate mapping, comprising: evaluating the plurality of constituent convolutions of the selected candidate mapping, using the hardware, to produce the plurality of partial results; and combining the partial results to produce the result of the dilated convolution.

The selecting may be done based on a type of the dilated convolution operation (for example, depth-wise dilated convolution), based on a size of the kernel, and/or based on the dilation rate.

In some examples, the selecting is based at least in part on the dilation rate, and, if the dilation rate is above a predetermined threshold, the selected candidate mapping comprises splitting the kernel into a plurality of constituent kernels, each constituent kernel comprising a single coefficient per input channel, each constituent kernel to be applied in a respective one of the constituent convolutions. Combining the partial results may comprise summing the partial results to produce the result of the dilated convolution.

The approach of the foregoing paragraph may be appropriate, in particular, if the dilated convolution operation is an ordinary convolution, not a depth-wise convolution.

In some examples, the selecting is based at least in part on the dilation rate, and, if the dilation rate is below a predetermined threshold, the selected candidate mapping comprises splitting the kernel into a plurality of constituent kernels, each constituent kernel comprising a row or column of the kernel, interspersed with zeros, each constituent kernel to be applied in a respective one of the constituent convolutions. Combining the partial results may comprise summing the partial results to produce the result of the dilated convolution.

This may be appropriate, in particular, if the dilated convolution operation is an ordinary convolution, not a depth-wise convolution.

In some examples, the selecting is based at least in part on the dilation rate, and, if the dilation rate is below a predetermined threshold, the selected candidate mapping comprises dividing the input data into a plurality of parts, each part to be subjected to a respective one of the constituent convolutions. Combining the partial results may comprise interleaving the partial results to produce the result of the dilated convolution.

Again, this may be appropriate if the dilated convolution operation is an ordinary convolution rather than a depth-wise convolution. As explained previously above, each part may be generated by subsampling the input data by a factor corresponding to the dilation rate. Each part may be generated by subsampling with a different starting offset. The interleaving may be performed according to the dilation rate. The mapping may comprise constructing an augmented kernel as discussed previously above. Alternatively, the input data may be divided into a plurality of parts along a first dimension and a second dimension.

In some examples, the selecting is based at least in part on the dilation rate, and at least in part on a type of the dilated convolution, and: if the dilated convolution contains a separate filter for each of a plurality input channels of the input data, then if the dilation rate is above a predetermined threshold, the selected candidate mapping comprises splitting the kernel into a plurality of constituent kernels, each constituent kernel comprising a row or column of the kernel, interspersed with zeros, each constituent kernel to be applied in a respective one of the constituent convolutions. Combining the partial results may comprise summing the partial results to produce the result of the dilated convolution.

This refers to the case of depth-wise convolution. It has been found that splitting the kernel into rows or columns may work well for higher dilation rates, for depth-wise convolution.

In other examples, the selecting is based at least in part on the dilation rate, and at least in part on a type of the dilated convolution, and: if the dilated convolution contains a separate filter for each of a plurality input channels of the input data, then if the dilation rate is above a predetermined threshold, the selected candidate mapping comprises dividing the input data into a plurality of parts, each part to be subjected to a respective one of the constituent convolutions. Combining the partial results may comprise interleaving the partial results to produce the result of the dilated convolution.

This also refers to the case of depth-wise convolution. It has been found that dividing the input data may work well for higher dilation rates, for depth-wise convolution.

If the dilated convolution contains a separate filter for each of a plurality input channels of the input data, then

if the dilation rate is below a predetermined threshold, the dilated convolution may be implemented by a single convolution with an augmented kernel, wherein the augmented kernel is constructed by inserting zeros between the coefficients of the kernel along a first dimension and a second dimension.

Again, this refers to the case of depth-wise convolution. It has been found that stuffing the kernel with zeros in the height and width dimensions may work well for lower dilation rates, for depth-wise convolution.

The mapping optionally comprises: defining a set of candidate mappings, each candidate mapping comprising a plurality of constituent convolutions; predicting a performance metric for each candidate mapping; selecting the candidate mapping with the highest predicted performance; and implementing the dilated convolution based on the selected candidate mapping, comprising: evaluating the plurality of constituent convolutions of the selected candidate mapping using the hardware, to produce the plurality of partial results; and combining the partial results to produce the result of the dilated convolution.

Also provided are data processing systems for implementing a dilated convolution according to claim 8 and claim 9.

The hardware accelerator may comprise a plurality of convolution engines, each configured to multiply a set of one or more input data values and a set of one or more weights, in each cycle of a plurality of hardware cycles, wherein the plurality of convolution engines is configured to evaluate the plurality of constituent convolutions.

Each convolution engine may comprises: a plurality of elements of multiply logic, each configured to multiply a weight by an input data value; and a plurality of elements of addition logic, configured to sum the outputs of the plurality of elements of multiply logic. The plurality of elements of addition logic may be arranged in a tree structure.

The controller may be configured to: select among a number of candidate mappings, each candidate mapping being associated with a respective plurality of constituent convolutions; and control the hardware accelerator to implement the dilated convolution based on the selected candidate mapping, wherein the hardware accelerator is configured to: evaluate the plurality of constituent convolutions of the selected candidate mapping, to produce the plurality of partial results; and combine the partial results to produce the result of the dilated convolution.

The controller may be configured to select among the candidate mappings based on one or more of: a size of the kernel; the dilation rate; and a type of the dilated convolution. In particular, as regards the type of convolution, the controller may make a different selection depending on whether the dilated convolution is a depth-wise convolution.

The controller may be configured to: define a set of candidate mappings, each candidate mapping comprising a plurality of constituent convolutions; predict a performance metric for each candidate mapping; select the candidate mapping with the highest predicted performance; and control the hardware accelerator to implement the dilated convolution based on the selected candidate mapping, wherein the hardware accelerator is configured to: evaluate the plurality of constituent convolutions of the selected candidate mapping, to produce the plurality of partial results; and combine the partial results to produce the result of the dilated convolution.

Also provided is a data processing system or NNA configured to perform a method as summarised above or according to any of claims 1 to 7. The data processing system or NNA may be embodied in hardware on an integrated circuit.

Also provided is a method of manufacturing, using an integrated circuit manufacturing system, a data processing system or NNA as summarised above or as claimed in any of claims 8 to 11.

Also provided is a method of manufacturing, using an integrated circuit manufacturing system, a data processing system or NNA as summarised above or as claimed in any of claims 8 to 11, the method comprising: processing, using a layout processing system, a computer readable description of the data processing system or NNA so as to generate a circuit layout description of an integrated circuit embodying the data processing system or NNA; and manufacturing, using an integrated circuit generation system, the data processing system or NNA according to the circuit layout description.

Also provided is computer readable code configured to cause a method as summarized above or as claimed in any of claims 1-7 to be performed when the code is run. Also provided is a computer readable storage medium having encoded thereon the computer readable code.

Also provided is an integrated circuit definition dataset that, when processed in an integrated circuit manufacturing system, configures the integrated circuit manufacturing system to manufacture a data processing system or NNA as summarised above or as claimed in any of claims 8 to 11.

Also provided is a computer readable storage medium having stored thereon a computer readable description of a data processing system or NNA as summarised above or as claimed in any of claims 8 to 11 that, when processed in an integrated circuit manufacturing system, causes the integrated circuit manufacturing system to manufacture an integrated circuit embodying the data processing system or NNA.

Also provided is a computer readable storage medium (optionally non-transitory) having stored thereon a computer readable description of a data processing system or NNA as summarised above or as claimed in any of claims 8 to 11 which, when processed in an integrated circuit manufacturing system, causes the integrated circuit manufacturing system to: process, using a layout processing system, the computer readable description of the data processing system or NNA so as to generate a circuit layout description of an integrated circuit embodying the data processing system or NNA; and manufacture, using an integrated circuit generation system, the data processing system or NNA according to the circuit layout description.

Also provided is an integrated circuit manufacturing system configured to manufacture a data processing system or NNA as summarised above or claimed in any of claims 8 to 11.

Also provided is an integrated circuit manufacturing system comprising: a computer readable storage medium (optionally non-transitory) having stored thereon a computer readable description of a data processing system or NNA as summarised above or as claimed in any of claims 8 to 11; a layout processing system configured to process the computer readable description so as to generate a circuit layout description of an integrated circuit embodying the data processing system or NNA; and an integrated circuit generation system configured to manufacture the data processing system or NNA according to the circuit layout description.

The layout processing system may be configured to determine positional information for logical components of a circuit derived from the integrated circuit description so as to generate a circuit layout description of an integrated circuit embodying the data processing system or NNA.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 illustrates the principle of dilated convolution;

Figure 2 illustrates a first method of implementing a dilated convolution, according to a comparative example;

Figure 3 illustrates a second method of implementing a dilated convolution, according to an embodiment;

Figure 4 illustrates a third method of implementing a dilated convolution, according to an embodiment;

Figures 5-6 illustrate a fourth method of implementing a dilated convolution, according to another embodiment;

Figure 7 is a block diagram of a data processing system for implementing dilated convolution, according to an embodiment;

Figure 8A is a block diagram of the hardware accelerator of Figure 7 ;

Figure 8B is a block diagram of one of the convolution engines of Figure 8A;

Figures 9-15 are flowcharts illustrating methods of implementing dilated convolution in hardware, according to various embodiments;

Figures 16A and 16B are plots showing the relative performance of different methods of implementing dilated convolutions, according to one exemplary hardware configuration;

Figure 17 shows a computer system in which a data processing system is implemented; and

Figure 18 shows an integrated circuit manufacturing system for generating an integrated circuit embodying a data processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

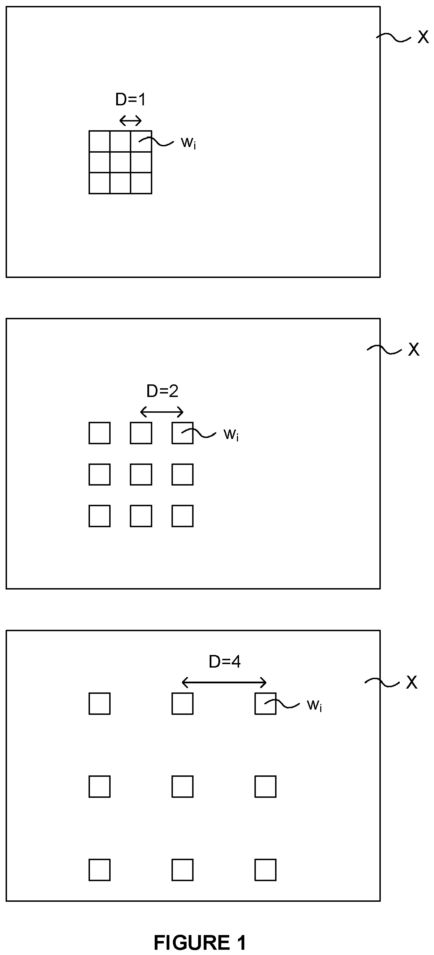

Figure 1 illustrates the basic principle of dilated convolution. It shows a 3 x 3 kernel, comprising weights $w_i$, being applied to input data X, with varying dilation rates D. The top drawing shows the case D=1. This corresponds to normal convolution, with no dilation. The middle drawing shows the case D=2. Here, the weights (coefficients) $w_i$ are applied to every second input data element, in both the height and width directions. That is, successive weights are applied to input data elements that are two elements apart. This increases the receptive field of the kernel, without increasing the number of weights or down-sampling the input. The bottom drawing shows the case D=4. Here, successive weights are applied to every fourth input data element - that is, the input data elements to which the weights are applied are spaced apart by four elements. Again, this applies in both the height and width directions, as the dilation rate is the same in both dimensions, in this example. As can be seen in the drawing, this further increases the receptive field of the kernel. If the input data X and the kernel contain multiple input channels, the principles illustrated in Figure 1 apply to each channel. In each channel, successive weights are applied to input data elements that are D elements apart, where D is the dilation rate.

Since the same behaviour applies to each input channel, the illustrations and much of the discussion below will focus on the case of just one input channel. It should be understood that this is done for simplicity of illustration and explanation, but without loss of generality - the methods described are equally applicable to input data and kernels having multiple channels.

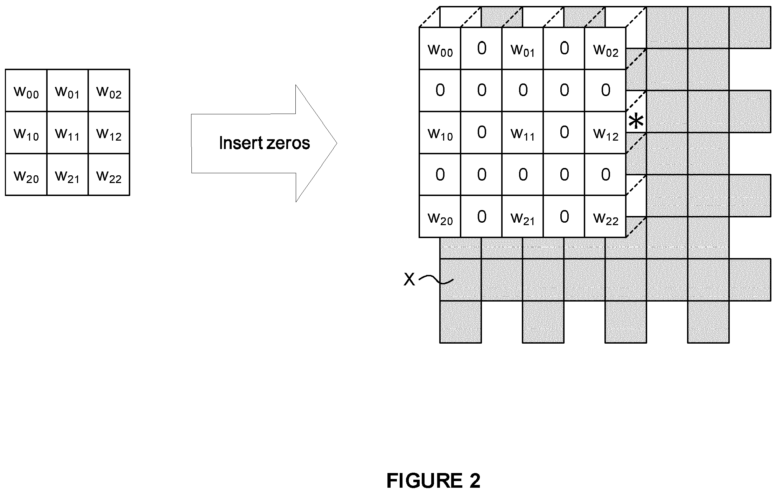

A first method for implementing a dilated convolution in hardware specialised at evaluating conventional convolutional layers, according to a comparative example, is illustrated in Figure 2. According to the first method, an enlarged kernel is generated, by packing (stuffing) the original kernel with zeros. Specifically, a kernel of size $K_h \times K_w$ kernel can be stuffed with zeros to form an enlarged kernel of size $(D(K_h - 1) + 1) \times (D(K_w - 1) + 1)$. The enlarged kernel is then applied to the input data in a normal convolution operation. This is illustrated in Figure 2 for the case of a 3 x 3 kernel with a dilation rate D=2. In the drawing, the asterisk operator ("*") denotes convolution. The individual weights of the kernel are labelled, to better illustrate the zero insertion pattern. The weight $w_{ij}$ refers to the weight in row i, column j of the kernel. When the enlarged kernel is convolved with the input data X, only some of the input data elements are multiplied by nonzero weights. Figure 2 shows a first position of the kernel, at the top-left corner of the input data X. The input data elements that will be multiplied by nonzero weights $w_{ij}$ are highlighted in white.

The first method has the benefit of simplicity. It implements a single dilated convolution operation as a single convolution, with a "dilated" kernel. This allows hardware such as a neural network accelerator, specialized at evaluating convolutional layers, to be used to perform the dilated convolution operation. However, it increases the size of the kernel that needs to be stored. The enlarged kernel includes redundant data, since it includes more zeros than nonzero weights $w_{ij}$ (even for a relatively low dilation rate D=2 in each dimension). Applying the enlarged kernel to the input data entails a large number of multiplications by zero, which may waste time and consume additional power in some implementations.

Embodiments according to the present disclosure provide various ways to implement a dilated convolution based on a number of constituent convolutions, either (i) by splitting the kernel to construct a set of constituent convolutions with smaller kernels, or (ii) by dividing the input data into multiple parts and applying a convolution to each part separately. The constituent convolutions are evaluated (for example, using existing NNA hardware) and their results are combined to produce the result of the dilated convolution. For cases in which the kernel is split, the combination involves summing the intermediate results of the constituent convolutions. For cases in which the data is split, the combination involves interleaving the intermediate results appropriately.

The different embodiments differ in the way that the hardware is configured to perform the dilated convolution. Different strategies may be better suited to different circumstances, depending on one or more of: the type of convolution, the dilation rate, and the kernel size. Consequently, in some embodiments, hardware is configured to select between the different splitting strategies, in order to choose an efficient implementation of a given dilated convolution.

Using the proposed approach can enable efficient implementation of dilated convolution operations - in particular, using existing artificial intelligence hardware accelerators, such as a neural network accelerator (NNA). In at least some circumstances, for any given hardware architecture, the approach of constructing the dilated convolution from a plurality of constituent convolutions is expected to bring performance benefits. The performance benefit may be in terms of speed of execution, storage footprint in memory (or in one or more buffers), memory access bandwidth, and/or power consumption. The exact amount of the performance benefit may depend on factors such as the dilation rate, the size of the kernel, and the overheads associated with particular calculations/operations on the specific hardware architecture.

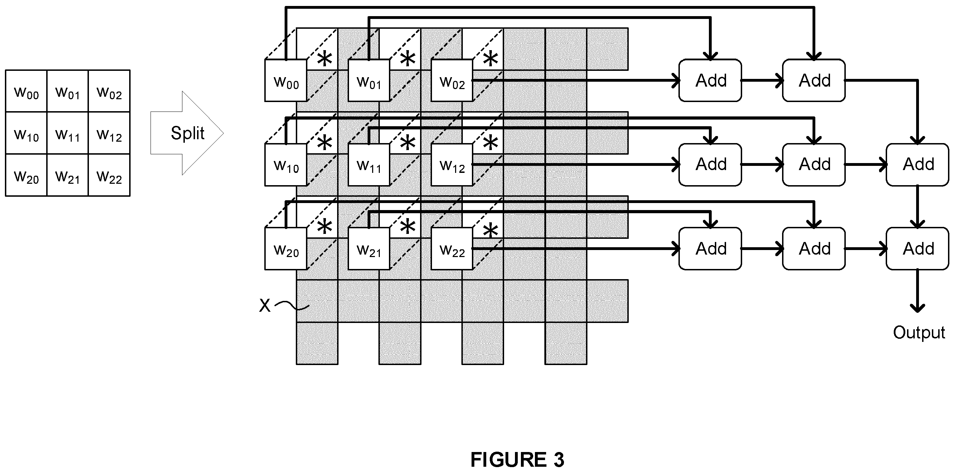

Figure 3 illustrates a second method for implementing a dilated convolution, according to an embodiment. In this method, the original kernel with dimensions $K_c \times K_h \times K_w$ is split into separate kernels with dimensions $K_c \times 1 \times 1$. Here, $K_c$ is the number of input channels in the kernel. For an ordinary convolution operation this is the same as the number of channels of the input data - that is, $K_c = C_{in}$. It is also possible to perform depth-wise convolution, in which each input channel is treated separately. Thus, for depth-wise convolution, $K_c = 1$.

In the case illustrated in Figure 3, showing a single input channel, each weight in the original kernel gives rise to a $1 \times 1$ kernel. There will be $K_h K_w$ of these constituent kernels. In the general case, $K_h K_w$ constituent convolutions, each with a kernel of size $K_c \times 1 \times 1$, are performed (with appropriate cropping of the input data, to ensure that each convolution starts and finishes in the correct place). The individual convolutions are indicated by the asterisk operators ("*"), in the drawing. The set of convolutions produces $K_h K_w$ partial results (one from each of the constituent convolutions), which are summed to produce the result of the dilated convolution. The summation is indicated by the bank of "add" operations in Figure 3. The summation of the intermediate results may be performed in fixed-point or floating-point arithmetic. In the present exemplary implementation, for example, the convolutions are performed in fixed point arithmetic and the summation of the partial results is performed in floating point arithmetic.

Compared with the first method, the second method may reduce redundancy, since there is no need to store an enlarged kernel with inserted zeros, and there is no need to multiply input data elements by zero. However, summing the partial results from the constituent convolutions may require a large number of addition operations. Each of these additions entails adding together tensors that have the same dimensions as the output data of the dilated convolution. These additions may be costly, in some circumstances, in some implementations. It has been found that the second method tends to work well for larger dilation rates. It may be generally more efficient than the first method, at larger dilation rates. If may be more efficient than the third method (described below) for normal convolution ($K_c > 1$), though not necessarily for depth-wise convolution ($K_c = 1$).

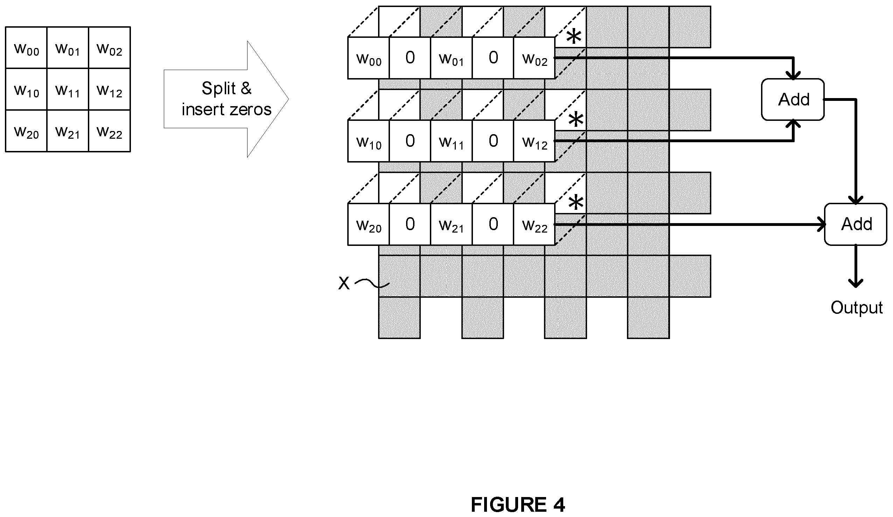

Figure 4 illustrates a third method for implementing a dilated convolution, according to another embodiment. The third method involves splitting the original kernel into slices - either row or columns. For example, a 2-D kernel may be split into 1-D slices, as shown in the example of Figure 4. Each slice consists of a single row of the original kernel. Zeros are then inserted into each slice, in between the original kernel coefficients, to form the kernels for the constituent convolutions. As before, the intermediate results of the constituent convolutions are summed to produce the output of the dilated convolution.

Compared with the second method, the third method leads to a smaller number of convolutions, each using a larger kernel, and a smaller number of summations. Comparing Figure 4 with Figure 3, using the example of an original kernel with dimensions 1 x 3 x 3, it can be seen that the number of convolutions is decreased from nine to three, and the number of additions is decreased from eight to two. However, the size of each kernel for the constituent convolutions is increased from one to five (including two zeros in each kernel).

More generally, taking the example of a kernel of size $K_h \times K_w$, the kernel can be split in the height direction, into $K_h$ kernels each of width ($D(K_w - 1) + 1$). Each of these smaller kernels includes $K_w$ elements from the original kernel, interspersed with ($D-1$)($K_w - 1$) zeros.

This strategy helps to avoid the proliferation of convolutions and summations that is inherent in the second method. Meanwhile, it eliminates much (but not all) of the zero-stuffing that is involved in the first method. Slices (in this example, rows) of the enlarged kernel that would consist solely of zeros are eliminated entirely.

Note that, in other embodiments using the third method, the original kernel could be split into columns instead of rows.

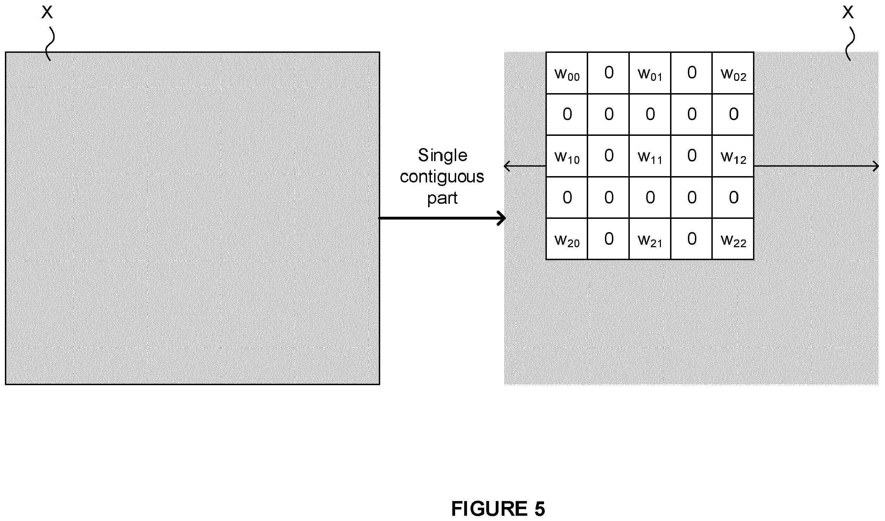

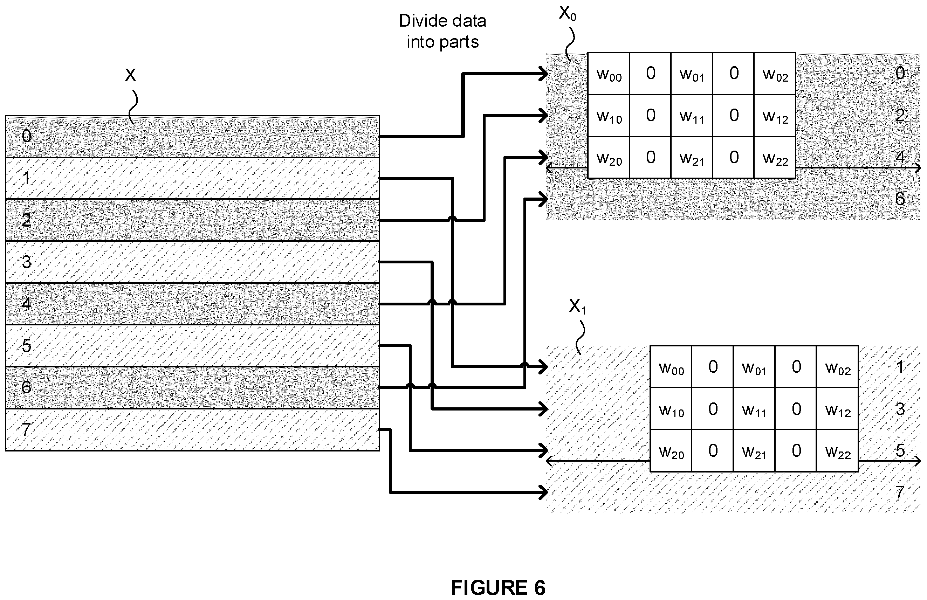

A fourth method for implementing a dilated convolution, according to a further embodiment, will now be described with reference to Figures 5 and 6. Figure 6 illustrates the principle of the fourth method; Figure 5 is provided for comparison. Figure 5 shows how the first method (of Figure 2) might be implemented in practice. A contiguous block of input data X may be loaded from memory, or from a buffer, into the hardware that will perform the convolution. The hardware performs the convolution by applying the enlarged kernel (with inserted zeros) to the contiguous block of input data. The kernel (made up of weights $w_{ij}$, interspersed with zeros) traverses over the height and width dimensions in strides, generating one output data element at each stride. However, it can be shown that, as the enlarged kernel traverses across the width dimension, generating a row of output data elements, only certain rows of input data elements are multiplied by nonzero weights $w_{ij}$. The rows involved depend on the dilation rate D. This recognition is exploited, in the fourth method, to reduce redundancy.

Figure 6 shows the corresponding picture for the fourth method. Instead of splitting up the kernel (as was done in the second and third methods), in the fourth method, the data is divided into parts. In particular, a first part Xo of the input data is loaded, by taking only the even rows of input data. The original 3 x 3 kernel is augmented by inserting zeros only along the row dimension. In other words, zeros are inserted in the original kernel, to produce an augmented kernel with dimensions 3 x 5 (for this example using just a single input channel). The augmented kernel is convolved with the first part Xo of the input data, to produce the even rows of output data.

The same procedure is then repeated for a second part $X_1$ of the input data. This part is formed of only the odd rows of input data. The second part is convolved with the same augmented kernel as the first part, to produce the odd rows of output data. The partial results from the two convolutions (i.e. the even row and odd rows of output data) are then combined by interleaving them appropriately (not shown in Figure 6).

It should be understood that the input data was divided into two parts consisting of even and odd rows, respectively, because the dilation rate was set to D=2 in this example. However, the same principle applies also to larger dilation rates. At larger dilation rates, the input data will be divided into a greater number of parts. Specifically, for a dilation rate of D in the height dimension, the data will be divided into D parts over the height dimension. Each part will be formed by taking one row every D rows of the original input data. The output will be formed by interleaving the partial results from each constituent convolution in a corresponding pattern.

The fourth method can be seen, in one sense, as an extension of the third method. The zero-stuffed constituent kernels from the third method are essentially recombined (concatenated) in the height dimension, to form a single kernel again. The input data is divided up into multiple parts, according to the dilation rate, and the single reconstituted kernel is convolved with each divided part, to produce part of the output of the dilated convolution. These partial outputs are combined by interleaving them (in a pattern that depends on the dilation rate).

In the present example of the fourth method, each row of the kernel is stuffed with zeros in the width dimension. The data is then divided up only along the height dimension. For a dilation rate D=2, for example, the data is divided into two parts - one part comprising the even rows and one part comprising the odd rows. The kernel is then convolved with each of these two parts, separately, to produce two partial results (each partial result being half the height of the final output). The partial results are combined by interleaving them over the height dimension. Note that the fourth method eliminates the separate, additional summations that were required in both the second and third methods to combine partial results. In the fourth method, the combination of partial results requires only interleaving, without any additional summations. All of the summations are absorbed into the convolution operations (which are typically very efficiently implemented, in neural network accelerator hardware).

Each divided part of the input data consists of a subset of the rows of the original input data. Essentially, the rows that would otherwise be convolved with a row of zeros in the dilated kernel (using the first method) are removed from each divided part. The rows that are retained in each part are those that need to be convolved with non-zero weights.

In another example of the fourth method, the strategy of dividing the input data can be applied to both rows and columns. The data is divided up in both the row and height dimensions, and a single convolution is applied to each divided part. In this case, there is no need for any zero-stuffing in the kernel. The dilation is handled exclusively by the division and rearrangement of the input data. Instead of creating an augmented kernel, the original (undilated) kernel is applied to each of the divided parts of the input data, in a separate convolution, and the partial results are recombined by interleaving in both the width and height dimensions.

The fourth method may be implemented by a suitably designed input buffer in an NNA. The input buffer is configured to feed the convolution engines of the NNA with the relevant divided parts of the input data.

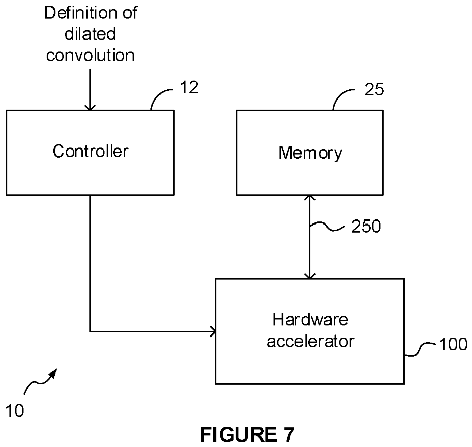

Figure 7 is a block diagram of a data processing system 10 configured to implement dilated convolutions, according to embodiments. The data processing system comprises a controller 12; a hardware accelerator 100; and a memory 25. The hardware accelerator 100 and memory 25 are connected by a bus 250. Input data for the dilated convolution is stored in the memory 25 and is loaded into the hardware accelerator 100 to perform the convolution operation. This is done under the control of the controller 12.

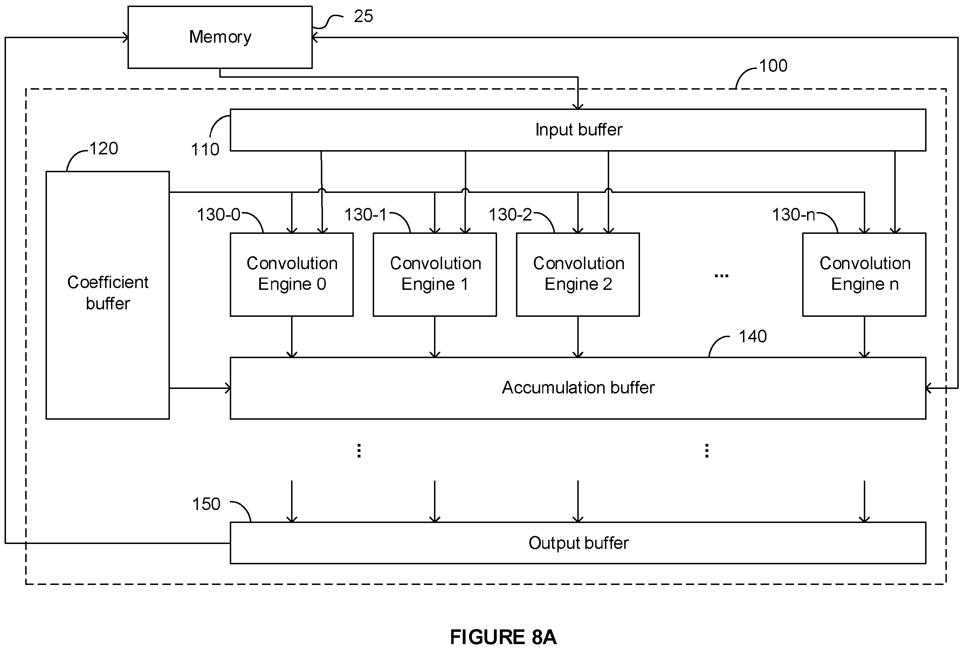

Figure 8A is a simplified block diagram of the hardware accelerator 100 used in Figure 7. In this example, the hardware accelerator 100 is an NNA. The NNA comprises an input buffer 110, a coefficient buffer 120, a plurality of processing elements (in particular, convolution engines) 130, an accumulation buffer 140, and an output buffer 150. In each hardware cycle, the coefficient buffer 120 is configured to supply a single set of coefficients (that is, weights) concurrently to all of the processing elements 130. Meanwhile, in each hardware cycle, the input buffer 110 is configured to supply each of the processing elements with a respective different set of the input data elements, corresponding to different shifts (strides) of the kernel. Each processing element 130 is configured to multiply the coefficients that it receives from the coefficient buffer 120 by the respective input data elements that it receives from the input buffer 110, and sum the results. That is each processing element 130 is configured to perform a sum-of-products calculation. The results of these sum-of-products calculations are output to the accumulation buffer 140, which accumulates (sums) them, as appropriate, over multiple hardware cycles. The accumulation buffer 140 is also configured to receive a bias value from the coefficient buffer 120, in each hardware cycle, which can also be added to the results of the multiplications. Additionally, for implementing the second and third methods, the accumulation buffer may be configured to receive partial results from the memory 25 and write partial results back to the memory 25.

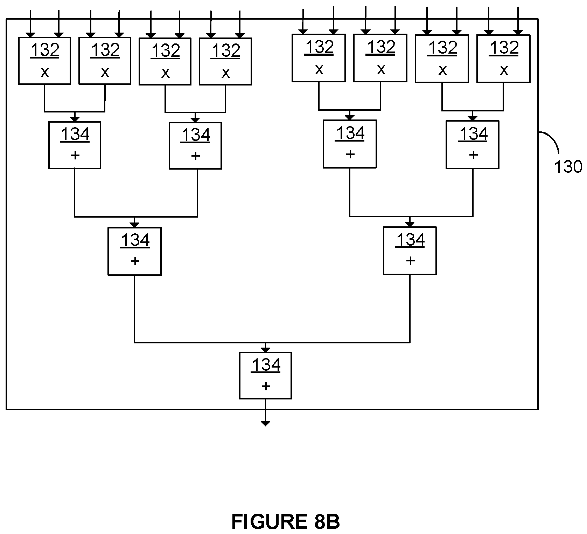

Figure 8B shows an example implementation of a convolution engine 130 as illustrated in Figure 8A, which comprises a plurality of elements of multiply logic 132, each configured to multiply a weight by an input data element, and a plurality of elements of addition logic 134, configured in a tree structure to sum the outputs of the elements of multiply logic 132.

For completeness, it is noted that a typical NNA would also incorporate additional blocks, including but not limited to: activation, pooling, element-wise, and normalisation blocks. The results of the processing performed by the hardware accelerator (including the convolution engines 130, accumulation buffer 140, and any additional blocks) are provided to the output buffer 150, which writes them to the memory 25.

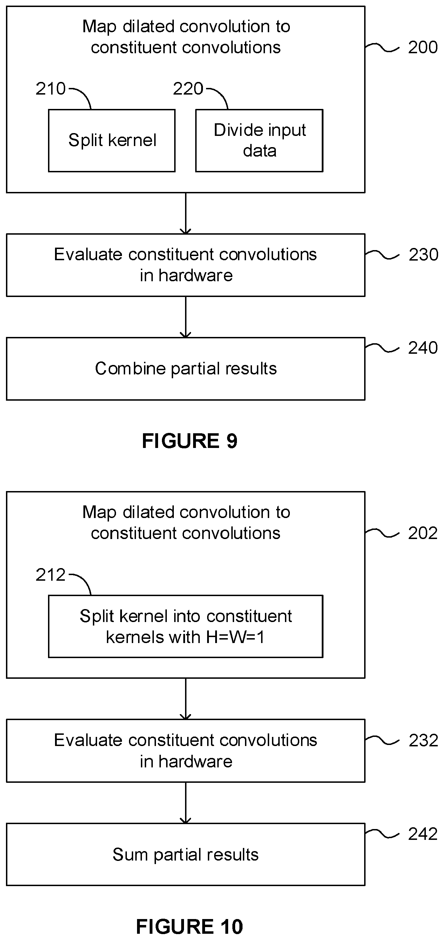

Figure 9 is a flowchart illustrating a general method of implementing a dilated convolution in hardware, according to an embodiment. In step 200, the controller 12 maps the dilated convolution to a plurality of constituent convolutions.

As explained above in reference to the second, third, and fourth methods, this involves either splitting the kernel into a plurality of constituent kernels (step 210), or dividing the input data into a plurality of parts (step 220). In step 230, the hardware accelerator 100 evaluates the plurality of constituent convolutions, to produce a respective plurality of partial results. In step 240, the hardware accelerator 100 combines these partial results to produce the result of the dilated convolution. As explained already above, the appropriate way of combining the partial results depends on how the constituent convolutions were arranged. If the kernel was split into constituent kernels, then the partial results are combined by summing them. On the other hand, if the input data was divided into a plurality of parts, then the partial results are combined by interleaving them.

In order to evaluate the plurality of constituent convolutions, the hardware accelerator 100 loads input data from the memory 25 into the input buffer 110 and loads the kernel (or constituent kernels, as appropriate) into the coefficient buffer 120. The input buffer 110 then supplies the input data to the convolution engines 130, while the coefficient buffer 120 supplies the weights of the kernel (or constituent kernels) to the convolution engines 130. The convolution engines 130 perform the sum-of-products calculations to evaluate the plurality of constituent convolutions.

The flowchart of Figure 10 illustrates a specific example of the general method of Figure 9. In Figure 9, the step 202 of mapping the dilated convolution to a plurality of constituent convolutions comprises splitting the kernel into constituent kernels with dimensions $K_c \times 1 \times 1$ (step 212). That is, the constituent kernels have height H and width W both equal to 1. In other words, the method of Figure 10 adopts the second method, described above with reference to Figure 3. In step 232, the hardware accelerator evaluates the constituent convolutions based on the respective constituent kernels. In step 242, the hardware accelerator 100 sums the partial results of the constituent convolutions, to produce the result of the dilated convolution. In the present embodiment, the summation is performed by the accumulation buffer 140. However, in other embodiments, it could conceivably be performed by an element-wise operations block, since the summation is done elementwise over the partial results (see the plurality of "add" operations in Figure 3).

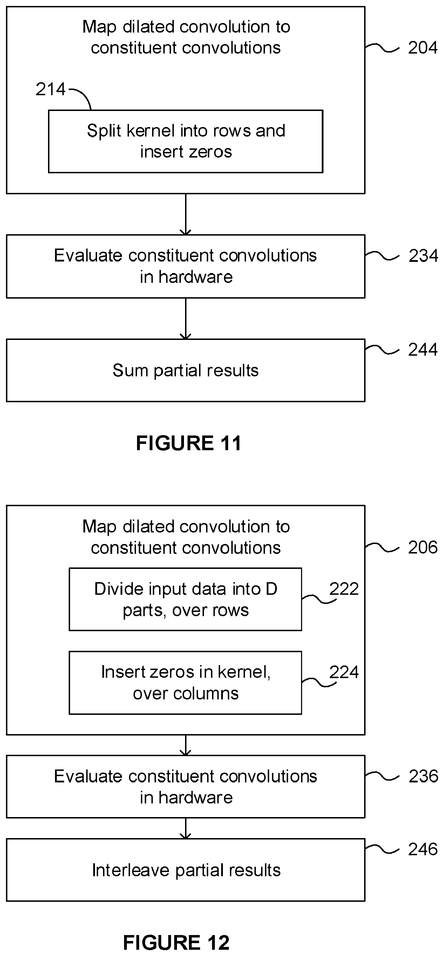

Figure 11 illustrates an embodiment that implements an example of the third method (explained above with reference to Figure 4. In this embodiment, the step 204 of mapping the dilated convolution to a plurality of constituent convolutions comprises splitting the kernel into rows (step 214). Zeros are inserted in each row, to form the plurality of constituent kernels. As seen in Figure 4, the number of constituent kernels is equal to the number of rows in the original kernel. In step 234, the hardware accelerator 100 evaluates the constituent convolutions, based on the respective constituent kernels. In step 244, the hardware accelerator sums the partial results of the constituent convolutions, to produce the result of the dilated convolution. As in the example of Figure 10, the summation is performed by the accumulation buffer 140, in this example. However, this is not essential; the summation could alternatively be performed by an element-wise operations block, or some other block of the hardware accelerator 100.

Figure 12 illustrates an embodiment implementing an example of the fourth method (explained above with reference to Figure 6). In this embodiment, the step 206 of mapping the dilated convolution to a plurality of constituent convolutions comprises dividing the input data into D parts in the height dimension (where D is the dilation rate in the height dimension). This is indicated by step 222, in the flowchart. The mapping performed by the controller 12 further comprises inserting zeros in the original kernel, in the width dimension, to construct an augmented kernel (step 224). In step 236, the hardware accelerator evaluates the constituent convolutions. The number of constituent convolutions is equal to D, the dilation rate. In each constituent convolution, the hardware accelerator 100 convolves the augmented kernel with one of the divided parts of the input data. In step 246 the hardware accelerator combines the results of the constituent convolutions, by interleaving their rows, to produce the result of the dilated convolution.

The hardware accelerator may be configured to implement the steps of Figure 12 - and in particular, steps 236 and 246 - in various ways. In the present example, the input data X is loaded into the input buffer 110 from the memory 25. The divided parts $X_0$ and $X_1$ are then supplied to the convolution engines 130 in order to evaluate the constituent convolutions. The augmented kernel is loaded into the coefficient buffer 120. The convolution engines 130 evaluate each constituent convolution by convolving the augmented kernel with the relevant divided part of the input data. The interleaving of the partial results (step 246) may be performed in the output buffer 150. Alternatively, it may be performed when writing the results to the memory 25.

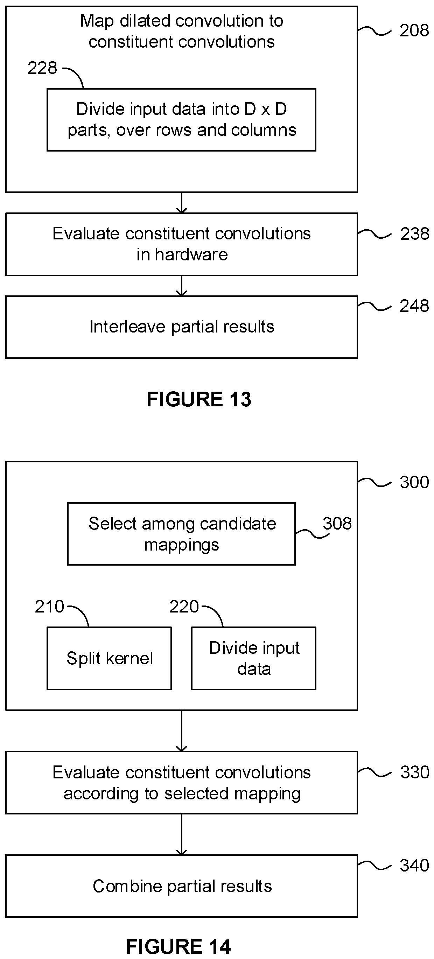

Figure 13 illustrates another embodiment implementing an example of the fourth method. In this embodiment, the step 208 of mapping the dilated convolution to a plurality of constituent convolutions comprises dividing the input data into D parts in the height dimension and D parts in the width dimension. (Here, it is assumed that the same dilation rate is applied in both dimensions.) Therefore, the input data is divided into D x D parts (step 228). This is done by subsampling the input data by a factor D in each of the height and width dimensions. Each divided part of the input data starts at a different offset position. For a dilation rate D=2, the division of the input data comprises applying the pattern illustrated in Figure 6 simultaneously in both the height dimension (as shown in Figure 6) and the width dimension. No augmented kernel is constructed, in this embodiment. In step 238, the hardware accelerator 100 evaluates the constituent convolutions by applying the original kernel to each of the divided parts of the data. Finally, in step 248, the hardware accelerator interleaves the partial results in both the height and width dimensions, to produce the result of the dilated convolution.

Figure 14 illustrates an embodiment in which the data processing system 10 is configured to selectively adopt different approaches for implementing the dilated convolution. In this embodiment, when the controller 12 is mapping the dilated convolution to a plurality of constituent convolutions (step 300), the controller selects among several potential candidate mappings (step 308). Each mapping is associated with a respective different set of constituent convolutions. For example, there may be one candidate mapping using the second method described above (Figure 3), based on splitting the kernel into constituent kernels (step 210). There may be another candidate mapping using the fourth method described above (Figure 6), based on dividing the input data (step 220). The controller 12 controls the hardware accelerator to implement the dilated convolution according to the selected candidate mapping. In step 330, the hardware accelerator 100 evaluates the constituent convolutions of the selected mapping. And in step 340, the hardware accelerator 100 combines the partial results of those constituent convolutions.

A suitable candidate mapping may be selected based on known properties of the different methods for implementing the dilated convolution. For instance, the selection may be based on the dilation rate and the type of dilated convolution. In one specific example:

- If the dilated convolution is a convolution with $K_c > 1$, then:

  ○ If the dilation rate D is greater than a predetermined threshold, the controller 12 selects the second method (Figure 3); and
  ○ If the dilation rate D is not greater than the predetermined threshold, the controller 12 selects the fourth method (Figure 6), if available, or otherwise selects the third method (Figure 4).

- On the other hand, if the dilated convolution is a depth-wise convolution ($K_c = 1$), then:

  ○ If the dilation rate D is greater than a predetermined threshold, the controller 12 selects the third method (Figure 4); and
  ○ If the dilation rate D is not greater than the predetermined threshold, the controller 12 selects the first method (Figure 2).

It should be understood that the specific thresholds will depend on the particular hardware implementation. The crossover points between different optimal methods will depend on the relative cost/efficiency of the different operations involved. For example, in a hardware architecture in which element-wise summation operations are costly, the second method may be relatively less efficient, and this may change the threshold at which this method is selected.

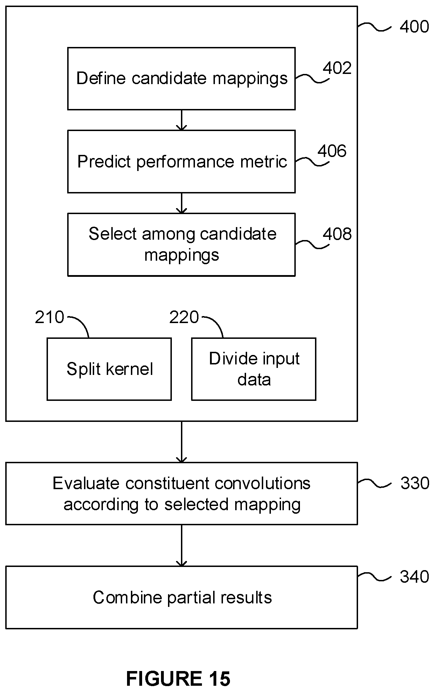

Figure 15 illustrates an embodiment in which the data processing system 10 is configured to actively assess which of the different methods may be most efficient, for a given hardware architecture. In this embodiment, the step 400 of mapping the dilated convolution to a plurality of constituent convolutions comprises some additional operations. In step 402, the controller 12 defines a set of candidate mappings. Each candidate mapping is based on a different set of constituent convolutions. Each candidate mapping may be based on a different one of the four methods described above with reference to Figures 2, 3, 4, and 6. In step 406, the controller 12 predicts a performance metric for each of the candidate mappings. The performance metric may take into account the speed at which the dilated convolution can be implemented using the candidate mapping (that is, the time taken for the calculations). Alternatively, or in addition, the performance metric may take into account the power consumption and/or memory access bandwidth of each candidate mapping. In step 408, the controller 12 selects among the different candidate mappings based on the predicted performance metric for each candidate mapping. Typically, the controller selects the candidate mapping with the highest predicted performance, according to the metric. In step 330, the hardware accelerator 100 evaluates the constituent convolutions of the selected candidate mapping; and in step 340, the hardware accelerator 100 combines the partial results of the constituent convolutions, to produce the result of the dilated convolution. Steps 330 and 340 are thus the same as in the method of Figure 14.

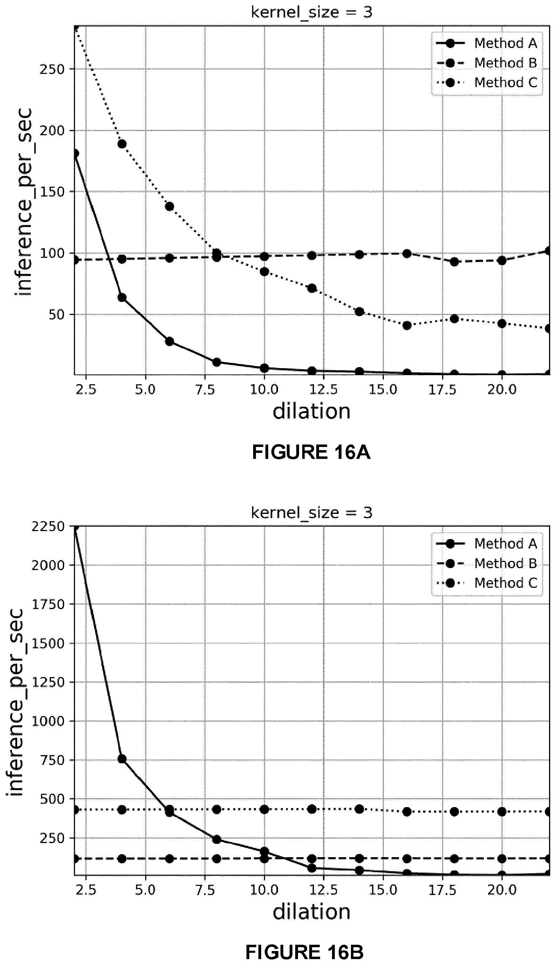

Figures 16A and 16B show performance results for an exemplary hardware implementation like the one shown in Figures 8A-8B. These plots demonstrate the relative benefits of the different methods for implementing dilated convolutions. Dilation rate D is shown on the x-axis; the performance metric (number of inferences per second) is shown on the y-axis. The first, second, and third methods are denoted in the graphs as Methods A, B, and C, respectively. Figure 16A shows results for a convolution with $K_c > 1$. It can be seen that the second method (Figure 3) outperforms the first and third methods at dilation rates D greater than about 8. Below this threshold, the third method (Figure 4) performs best. The fourth method was not tested on the current hardware implementation; however, theoretically predicted performance results for this method show that it performs similarly to - but slightly better than - the third method, for all dilation rates. The greatest benefits are seen at lower dilation rates. The threshold for selecting the fourth method may therefore be slightly higher than the threshold for selecting the third method. Figure 16B shows results for a depth-wise convolution ($K_c = 1$). It can be seen that the third method (Figure 4) outperforms the first and second methods at dilation rates D greater than about 6. Below this threshold, the first method (Figure 2) performs best.

The foregoing embodiments are exemplary only. It should be understood that various modifications can be made to these embodiments without departing from the scope of the claims.

In the embodiment of Figure 7, the data processing system was constructed around the hardware accelerator 100 - which, in that example, was an NNA. However, the data processing system may instead be implemented partially or entirely within an NNA. For example, the hardware accelerator 100 and controller 12 may represent subcomponents within an NNA.

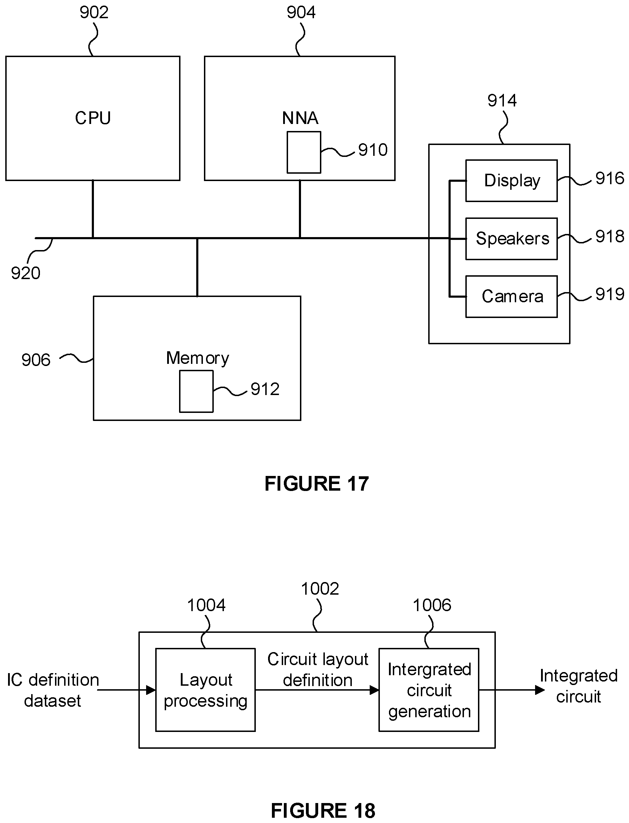

Figure 17 shows a computer system in which the data processing systems described herein may be implemented. The computer system comprises a CPU 902, an NNA 904, a memory 906 and other devices 914, such as a display 916, speakers 918 and a camera 919. A processing block 910 (corresponding to controller 12 and hardware accelerator 100) is implemented on the NNA 904. In other examples, the processing block 910 may be implemented on the CPU 902. The components of the computer system can communicate with each other via a communications bus 920 (corresponding to bus 25). A store 912 (corresponding to memory 25) is implemented as part of the memory 906.

While Figure 17 illustrates one implementation of an artificial intelligence accelerator system, including NNA 904, it will be understood that a similar block diagram could be drawn for a graphics processing system- for example, by replacing either the CPU 902 or the NNA 904 with a graphics processing unit (GPU), or by adding the GPU as an additional unit. In such cases, the processing block 910 can be implemented in the GPU.

The data processing system of Figures 7-8 is shown as comprising a number of functional blocks. This is schematic only and is not intended to define a strict division between different logic elements of such entities. Each functional block may be provided in any suitable manner. It is to be understood that intermediate values described herein as being formed by a data processing system need not be physically generated by the data processing system at any point and may merely represent logical values which conveniently describe the processing performed by the data processing system between its input and output.

The data processing systems described herein may be embodied in hardware on an integrated circuit. The data processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java® or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a data processing system or NNA configured to perform any of the methods described herein, or to manufacture a data processing system or NNA comprising any apparatus described herein. An integrated circuit definition dataset may be, for example, an integrated circuit description.

Therefore, there may be provided a method of manufacturing, at an integrated circuit manufacturing system, a data processing system or NNA as described herein. Furthermore, there may be provided an integrated circuit definition dataset that, when processed in an integrated circuit manufacturing system, causes the method of manufacturing a data processing system or NNA to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a data processing system or NNA will now be described with respect to Figure 18.

Figure 18 shows an example of an integrated circuit (IC) manufacturing system 1002 which is configured to manufacture a data processing system or NNA as described in any of the examples herein. In particular, the IC manufacturing system 1002 comprises a layout processing system 1004 and an integrated circuit generation system 1006. The IC manufacturing system 1002 is configured to receive an IC definition dataset (e.g. defining a data processing system or NNA as described in any of the examples herein), process the IC definition dataset, and generate an IC according to the IC definition dataset (e.g. which embodies a data processing system or NNA as described in any of the examples herein). The processing of the IC definition dataset configures the IC manufacturing system 1002 to manufacture an integrated circuit embodying a data processing system or NNA as described in any of the examples herein.

The layout processing system 1004 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1004 has determined the circuit layout it may output a circuit layout definition to the IC generation system 1006. A circuit layout definition may be, for example, a circuit layout description.

The IC generation system 1006 generates an IC according to the circuit layout definition, as is known in the art. For example, the IC generation system 1006 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1006 may be in the form of computer-readable code which the IC generation system 1006 can use to form a suitable mask for use in generating an IC.

The different processes performed by the IC manufacturing system 1002 may be implemented all in one location, e.g. by one party. Alternatively, the IC manufacturing system 1002 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a data processing system or NNA without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 18 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 18, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1.  A method of implementing in hardware a dilated convolution, comprising convolving a kernel with input data, using a given dilation rate, the method comprising:

    mapping (200) the dilated convolution to a plurality of constituent convolutions;
    evaluating (230) the plurality of constituent convolutions using the hardware, to produce a respective plurality of partial results; and
    combining (240) the partial results to produce the result of the dilated convolution,
    wherein the mapping (200) comprises splitting (210) the kernel into a plurality of constituent kernels, each constituent kernel comprising a row or column of the kernel, interspersed with zeros, each constituent kernel to be applied in a respective one of the constituent convolutions, and
    wherein combining (244) the partial results comprises summing the partial results to produce the result of the dilated convolution.

2.  A method of implementing in hardware a dilated convolution, comprising convolving a kernel with input data, using a given dilation rate, the method comprising:

    mapping (200) the dilated convolution to a plurality of constituent convolutions;
    evaluating (230) the plurality of constituent convolutions using the hardware, to produce a respective plurality of partial results; and
    combining (240) the partial results to produce the result of the dilated convolution,
    wherein the mapping (200) comprises

    constructing (224) an augmented kernel for use in each of the constituent convolutions, wherein the augmented kernel is constructed by inserting zeros between the coefficients of the kernel along a first dimension, and
    dividing (220, 222) the input data into a plurality of parts along a second dimension, different from the first dimension, each part to be subjected to a respective one of the constituent convolutions, and

    wherein combining the partial results comprises interleaving (246) the partial results to produce the result of the dilated convolution.

3.  The method of any one of the preceding claims, wherein the mapping comprises:

selecting (308) among a number of potential candidate mappings, each candidate mapping being associated with a respective plurality of constituent convolutions; and

implementing the dilated convolution based on the selected candidate mapping, comprising:

evaluating (330) the plurality of constituent convolutions of the selected candidate mapping, using the hardware, to produce the plurality of partial results; and

combining (340) the partial results to produce the result of the dilated convolution.

4. The method of claim 3, wherein the selecting is based at least in part on the dilation rate, wherein, if the dilation rate is below a predetermined threshold, either:

(A) the selected candidate mapping comprises splitting the kernel into a plurality of constituent kernels, each constituent kernel comprising a row or column of the kernel, interspersed with zeros, each constituent kernel to be applied in a respective one of the constituent convolutions; and

combining the partial results comprises summing the partial results to produce the result of the dilated convolution; or

(B) the selected candidate mapping comprises dividing the input data into a plurality of parts, each part to be subjected to a respective one of the constituent convolutions; and

combining the partial results comprises interleaving the partial results to produce the result of the dilated convolution.

5. The method of any one of claims 3-4, wherein the selecting is based at least in part on the dilation rate, and at least in part on a type of the dilated convolution, wherein:

if the dilated convolution contains a separate filter for each of a plurality input channels of the input data, then if the dilation rate is above a predetermined threshold, either:

(A) the selected candidate mapping comprises splitting the kernel into a plurality of constituent kernels, each constituent kernel comprising a row or column of the kernel, interspersed with zeros, each constituent kernel to be applied in a respective one of the constituent convolutions; and

combining the partial results comprises summing the partial results to produce the result of the dilated convolution; or

(B) the selected candidate mapping comprises dividing the input data into a plurality of parts, each part to be subjected to a respective one of the constituent convolutions; and

combining the partial results comprises interleaving the partial results to produce the result of the dilated convolution.

6. The method of any one of claims 3-5, wherein the selecting is based at least in part on the dilation rate, and at least in part on a type of the dilated convolution, wherein:

if the dilated convolution contains a separate filter for each of a plurality input channels of the input data, then if the dilation rate is below a predetermined threshold, the dilated convolution is implemented by a single convolution with an augmented kernel, wherein the augmented kernel is constructed by inserting zeros between the coefficients of the kernel along a first dimension and a second dimension.

7. The method of any one of the preceding claims, wherein the mapping comprises:

defining (402) a set of candidate mappings, each candidate mapping comprising a plurality of constituent convolutions;

predicting (406) a performance metric for each candidate mapping;

selecting (408) the candidate mapping with the highest predicted performance; and

implementing the dilated convolution based on the selected candidate mapping, comprising:

evaluating (330) the plurality of constituent convolutions of the selected candidate mapping using the hardware, to produce the plurality of partial results; and

combining (340) the partial results to produce the result of the dilated convolution.

8. A data processing system (10) for implementing a dilated convolution comprising convolving a kernel with input data, using a given dilation rate, the system comprising:

a controller (12), configured to map (200) the dilated convolution to a plurality of constituent convolutions; and
a hardware accelerator (100), configured to:

evaluate (230) the plurality of constituent convolutions, to produce a respective plurality of partial results, and
combine (240) the partial results to produce the result of the dilated convolution,

wherein the controller is configured to map the dilated convolution to the plurality of constituent convolutions by splitting (210) the kernel into a plurality of constituent kernels, each constituent kernel comprising a row or column of the kernel, interspersed with zeros, each constituent kernel to be applied in a respective one of the constituent convolutions, and
wherein the hardware accelerator is configured to combine (244) the partial results by summing the partial results to produce the result of the dilated convolution.

9. A data processing system (10) for implementing a dilated convolution comprising convolving a kernel with input data, using a given dilation rate, the system comprising:

a controller (12), configured to map (200) the dilated convolution to a plurality of constituent convolutions; and
a hardware accelerator (100), configured to:

evaluate (230) the plurality of constituent convolutions, to produce a respective plurality of partial results, and
combine (240) the partial results to produce the result of the dilated convolution,

wherein the controller is configured to map the dilated convolution to the plurality of constituent convolutions by:

constructing (224) an augmented kernel for use in each of the constituent convolutions, wherein the augmented kernel is constructed by inserting zeros between the coefficients of the kernel along a first dimension; and
dividing (220) the input data into a plurality of parts along a second dimension, different from the first dimension, each part to be subjected to a respective one of the constituent convolutions, and

wherein the hardware accelerator is configured to combine the partial results by interleaving (246) the partial results to produce the result of the dilated convolution.

10. The data processing system of any one of claims 8-9, wherein the controller is configured to:

select (308; 408) among a number of potential candidate mappings, each candidate mapping being associated with a respective plurality of constituent convolutions; and
control the hardware accelerator to implement the dilated convolution based on the selected candidate mapping, wherein the hardware accelerator is configured to:

evaluate (330) the plurality of constituent convolutions of the selected candidate mapping, to produce the plurality of partial results; and
combine (340) the partial results to produce the result of the dilated convolution.

11. The data processing system of claim 10, wherein the controller is configured to select (308) among the potential candidate mappings based on one or more of:

a size of the kernel;
the dilation rate; and
a type of the dilated convolution.

12. Computer readable code configured to cause the method of any of claims 1-7 to be performed when the code is run.

13. An integrated circuit definition dataset that, when processed in an integrated circuit manufacturing system, configures the integrated circuit manufacturing system to manufacture a data processing system as claimed in any of claims 8 to 11.

**14.** A computer readable storage medium having stored thereon a computer readable description of a data processing system as claimed in any of claims 8 to 11 that, when processed in an integrated circuit manufacturing system, causes the integrated circuit manufacturing system to manufacture an integrated circuit embodying the data processing system.

**15.** An integrated circuit manufacturing system configured to manufacture a data processing system as claimed in any of claims 8 to 11.

**FIGURE 1**

FIGURE 2

FIGURE 3

FIGURE 4

| $W_{02}$ | 0 | $W_{12}$ | 0 | $W_{22}$ |
|---|---|---|---|---|
| 0 | 0 | 0 | 0 | 0 |
| $W_{01}$ | 0 | $W_{11}$ | 0 | $W_{21}$ |
| 0 | 0 | 0 | 0 | 0 |
| $W_{00}$ | 0 | $W_{10}$ | 0 | $W_{20}$ |

X

X

Single contiguous part

**FIGURE 5**

Divide data
into parts

$X_0$

X

| | | | | | |
|---|---|---|---|---|---|
| $w_{00}$ | 0 | $w_{01}$ | 0 | $w_{02}$ | 0 |
| $w_{10}$ | 0 | $w_{11}$ | 0 | $w_{12}$ | 2 |
| $w_{20}$ | 0 | $w_{21}$ | 0 | $w_{22}$ | 4 |
| | | | | | 6 |

0
1
2
3
4
5
6
7

$X_1$

| | | | | | |
|---|---|---|---|---|---|
| $w_{00}$ | 0 | $w_{01}$ | 0 | $w_{02}$ | 1 |
| $w_{10}$ | 0 | $w_{11}$ | 0 | $w_{12}$ | 3 |
| $w_{20}$ | 0 | $w_{21}$ | 0 | $w_{22}$ | 5 |
| | | | | | 7 |

FIGURE 6

Definition of
dilated
convolution

┌─────────────┐ ⌐ 12
│             │
│ Controller  │
│             │
└─────────────┘

┌─────────────┐ ⌐ 25
│             │
│   Memory    │
│             │
└─────────────┘

⌐ 250

┌─────────────┐
│             │
│  Hardware   │
│ accelerator │ ⌐ 100
│             │
└─────────────┘

10

**FIGURE 7**

**FIGURE 8A**

**FIGURE 8B**

```
┌─────────────────────────────────────────────┐
│        Map dilated convolution to            │
│         constituent convolutions             │─── 200
│                                              │
│   210─┐              220─┐                    │
│   ┌─────────────┐    ┌─────────────┐         │
│   │             │    │             │         │
│   │ Split kernel│    │ Divide input│         │
│   │             │    │    data     │         │
│   └─────────────┘    └─────────────┘         │
└─────────────────────────────────────────────┘
                      │
                      ▼
┌─────────────────────────────────────────────┐
│      Evaluate constituent convolutions       │─── 230
│              in hardware                      │
└─────────────────────────────────────────────┘
                      │
                      ▼
┌─────────────────────────────────────────────┐
│           Combine partial results            │─── 240
│                                              │
└─────────────────────────────────────────────┘
```

## FIGURE 9

```
┌─────────────────────────────────────────────┐
│        Map dilated convolution to            │
│         constituent convolutions             │─── 202
│                                              │
│   212─┐                                       │
│   ┌──────────────────────────────┐           │
│   │   Split kernel into constituent│          │
│   │    kernels with H=W=1          │          │
│   └──────────────────────────────┘           │
└─────────────────────────────────────────────┘
                      │
                      ▼
┌─────────────────────────────────────────────┐
│      Evaluate constituent convolutions       │─── 232
│              in hardware                      │
└─────────────────────────────────────────────┘
                      │
                      ▼
┌─────────────────────────────────────────────┐
│            Sum partial results               │─── 242
│                                              │
└─────────────────────────────────────────────┘
```

## FIGURE 10

Map dilated convolution to
constituent convolutions — 204

214 —

Split kernel into rows and
insert zeros

Evaluate constituent convolutions
in hardware — 234

Sum partial results — 244

## FIGURE 11

Map dilated convolution to
constituent convolutions — 206

Divide input data into D
parts, over rows — 222

Insert zeros in kernel,
over columns — 224

Evaluate constituent convolutions
in hardware — 236

Interleave partial results — 246

## FIGURE 12

Map dilated convolution to
constituent convolutions — 208

228 —

Divide input data into D x D
parts, over rows and columns

Evaluate constituent convolutions
in hardware — 238

Interleave partial results — 248

**FIGURE 13**

Select among candidate
mappings — 308

210 — 220 —

Split kernel | Divide input
data

— 300

Evaluate constituent convolutions
according to selected mapping — 330

Combine partial results — 340

**FIGURE 14**

FIGURE 15

kernel_size = 3

FIGURE 16A

kernel_size = 3

FIGURE 16B

**FIGURE 17**

**FIGURE 18**

Europäisches
Patentamt

European
Patent Office

Office européen
des brevets

## EUROPEAN SEARCH REPORT

**Application Number**

EP 22 15 2983

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 678 088 A1 (SAMSUNG ELECTRONICS CO LTD [KR]) 8 July 2020 (2020-07-08) * paragraph [0002] – paragraphs [0006], [0035] – [0040]; figures 4A-4H * ----- | 1-15 | INV. G06F17/15 |
| A | EP 3 480 745 A1 (IMAGINATION TECH LTD [GB]) 8 May 2019 (2019-05-08) * figure 3 * ----- | 1-15 | |

TECHNICAL FIELDS
SEARCHED      (IPC)

G06F

The present search report has been drawn up for all claims

| Place of search | Date of completion of the search | Examiner |
|---|---|---|
| Berlin | 16 June 2022 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 15 2983

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2022

| Patent document cited in search report | | Publication date | Patent family member(s) | | Publication date |
|---|---|---|---|---|---|
| EP 3678088 | A1 | 08-07-2020 | CN | 111401512 A | 10-07-2020 |
| | | | EP | 3678088 A1 | 08-07-2020 |
| | | | KR | 20200084808 A | 13-07-2020 |
| | | | US | 2020218936 A1 | 09-07-2020 |
| EP 3480745 | A1 | 08-05-2019 | CN | 110046700 A | 23-07-2019 |
| | | | EP | 3480745 A1 | 08-05-2019 |
| | | | GB | 2568086 A | 08-05-2019 |
| | | | US | 2019138567 A1 | 09-05-2019 |
| | | | US | 2021157876 A1 | 27-05-2021 |
| | | | US | 2022043886 A1 | 10-02-2022 |

EPO FORM P0459

For more details about this annex : see Official Journal of the European Patent Office, No. 12/82